Europäisches Patentamt

European Patent Office

Office européen des brevets

(19)

(11) Veröffentlichungsnummer : **0 242 358 B1**

(12) **EUROPÄISCHE PATENTSCHRIFT**

(45) Veröffentlichungstag der Patentschrift :
06.11.91 Patentblatt 91/45

(51) Int. Cl.⁵ : **A61C 17/06**

(21) Anmeldenummer : **86900003.4**

(22) Anmeldetag : **16.12.85**

(86) Internationale Anmeldenummer :
**PCT/AT85/00057**

(87) Internationale Veröffentlichungsnummer :
**WO 86/03669 03.07.86 Gazette 86/14**

(54) **VERFAHREN ZUR TRENNUNG EINES DENTALEN FESTSTOFF-FLÜSSIGKEITGEMISCHES.**

Teilanmeldung 91103247.2 eingereicht am 16/12/85.

(30) Priorität : **17.12.84 AT 3986/84**

(43) Veröffentlichungstag der Anmeldung :
**28.10.87 Patentblatt 87/44**

(45) Bekanntmachung des Hinweises auf die Patenterteilung :
**06.11.91 Patentblatt 91/45**

(84) Benannte Vertragsstaaten :
**AT BE CH DE FR GB IT LI NL SE**

(56) Entgegenhaltungen :
EP-A- 96 670
EP-B- 100 327
EP-B- 166 582
EP-B- 211 808
EP-B- 263 344
DE-A- 2 138 831

(56) Entgegenhaltungen :
DE-A- 3 030 614
DE-A- 3 521 929
DE-B- 2 342 543
DE-U- 8 314 829
SE-B- 427 988
US-A- 2 759 476

(73) Patentinhaber : **Trawöger, Werner**
**Höttinger Au 60**
**A-6020 Innsbruck (AT)**
Patentinhaber : **PREGENZER, Bruno**
**Huebe 30**
**A-6173 Oberperfuss (AT)**

(72) Erfinder : **Trawöger, Werner**
**Höttinger Au 60**
**A-6020 Innsbruck (AT)**
Erfinder : **PREGENZER, Bruno**
**Huebe 30**
**A-6173 Oberperfuss (AT)**

(74) Vertreter : Hofinger, Engelbert et al
Torggler-Hofinger Wilhelm-Greil-Strasse 16
A-6020 Innsbruck (AT)

**Beschreibung**

Die Erfindung betrifft ein Verfahren zur Trennung eines dentalen Feststoff-Flüssigkeitsgemisches, das dem Einlaß einer Zentrifuge zugeführt wird, wobei die Feststoffe aus dem Gemisch abzentrifugiert, nach jeder Zentrifugierphase gemeinsam mit Restflüssigkeit unter Einwirkung von Schwerkraft durch den Auslaß der Zentrifuge entleert und von oben in einen Absetzbehälter eingebracht werden, in dem sie sedimentiert werden, worauf die sich über den absetzenden Feststoffen sammelnde Restflüssigkeit nach oben abgesaugt und wieder der Zentrifuge zugeführt wird, in der noch enthaltene Feststoffe neuerlich zentrifugiert werden, und wobei gereinigte Flüssigkeit in einen Ablaufkanal ausgetragen wird.

Ein derartiges Verfahren sowie eine Einrichtung zu dessen Durchführung sind der DE-A-30 30 614 zu entnehmen. Die Feststoffe fließen dort bei Stillstand der Zentrifuge unter Schwerkrafteinwirkung durch einen an der Unterseite der Zentrifuge angeordneten Auslaßstutzen aus und werden in einem Absetzbehälter aufgefangen, in den der Auslaßstutzen ragt. Da die Zentrifuge aufgrund der Zentrifugalkräfte auch als Pumpe wirkt, wird zu Beginn jeder weiteren Zentrifugierphase die sich oberhalb der sedimentierenden Feststoffe sammelnde Restflüssigkeit durch den Auslaßstutzen in die Zentrifuge zurückgesaugt, wodurch ein maximales Flüssigkeitsniveau nie überschritten wird. Die Sedimentation der Feststoffe wird dabei trotz im Absetzbehälter angeordneter Beruhigungsflügel bei jeder Rücksaugung der Restflüssigkeit durch den mitrotierenden Auslaßstutzen empfindlich gestört. Teile der abgeschiedenen Feststoffe werden wieder mitgerissen, die in der Zentrifuge wieder abzentrifugiert werden, neuerlich in den Absetzbehälter abfließen, und so zwischen der Zentrifuge und dem Absetzbehälter hin- und hertransportiert werden.

Die Erfindung hat es sich daher zur Aufgabe gestellt, die neuerlich zu zentrifugierende Restflüssigkeit so aus dem Absetzbehälter zu entnehmen, daß die Sedimentation der Feststoffe möglichst wenig gestört wird.

Erfindungsgemäß wird diese Aufgabe nun dadurch gelöst, daß ein die Zentrifuge und den Absetzbehälter enthaltender Kreislauf ausgebildet wird, in dem die Restflüssigkeit, gemeinsam mit den aus der Zentrifuge ausfließenden Feststoffen, über eine im Absetzbehälter oberhalb eines maximalen Flüssigkeitsniveaus mündende Leitung in den Absetzbehälter gesaugt und, gemeinsam mit noch enthaltenen Feststoffen, aus dem Absetzbehälter zu dem Zentrifugeneinlaß übergeleitet wird.

Dank des Kreislaufes erfolgt somit keine direkte Rücksaugung der feststoffbeladenen Restflüssigkeit in die Zentrifuge. Es entfallen die Durchwirbelung der im Absetzbehälter bereits enthaltenen Flüssigkeit beim Entleeren des Zentrifugeninhalts, da der Schlamm in den Absetzbehälter gesaugt wird, und die Durchwirbelung bei der Entnahme der Restflüssigkeit aus dem Absetzbehälter, da kein rotierender Teil in die Restflüssigkeit eintaucht. Die Sedimentation der Feststoffe kann somit im wesentlichen ungestört erfolgen.

Eine bevorzugte Ausführung sieht dabei vor, daß der Kreislauf durch ein von der zahnärztlichen Absauganlage erzeugtes Unterdrucksystem geführt wird, wobei die Zentrifuge außerhalb und der Absetzbehälter innerhalb des Unterdrucksystems vorgesehen werden, daß in der Zentrifuge ein unter Normaldruck zufließendes sowie ein im Unterdrucksystem zugeführtes und daraus mittels einer Hilfspumpe ausgetragenes Gemisch gemeinsam getrennt werden, wobei die aus der Zentrifuge ausfließende Restflüssigkeit gemeinsam mit den Feststoffen in das im Unterdrucksystem zugeführte Gemisch eingesaugt wird.

Dadurch kann, beispielsweise gemäß der DE-A-32 31 272, ein Gemisch, das zum einen aus einer Speischale und zum anderen aus einem mit einer Luftsaugpumpe in Verbindung stehenden Saughandstück stammt, gemeinsam bzw. gleichzeitig getrennt werden, wobei für die Absaugung des aus der Zentrifuge kommenden Schlammes in den Absetzbehälter die Luftsaugpumpe verwendet wird.

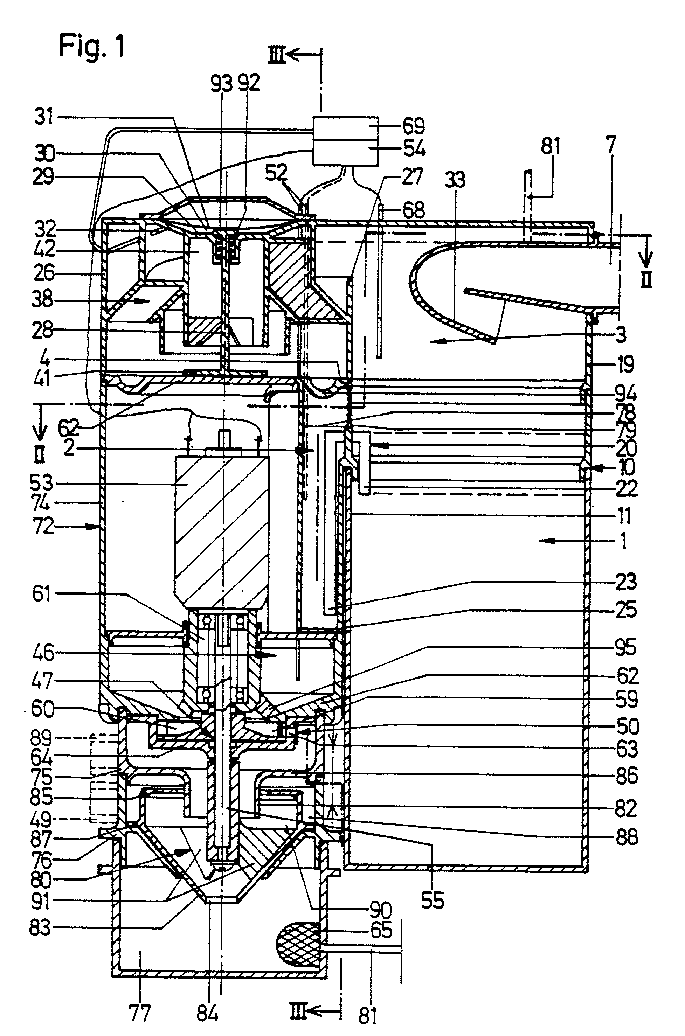

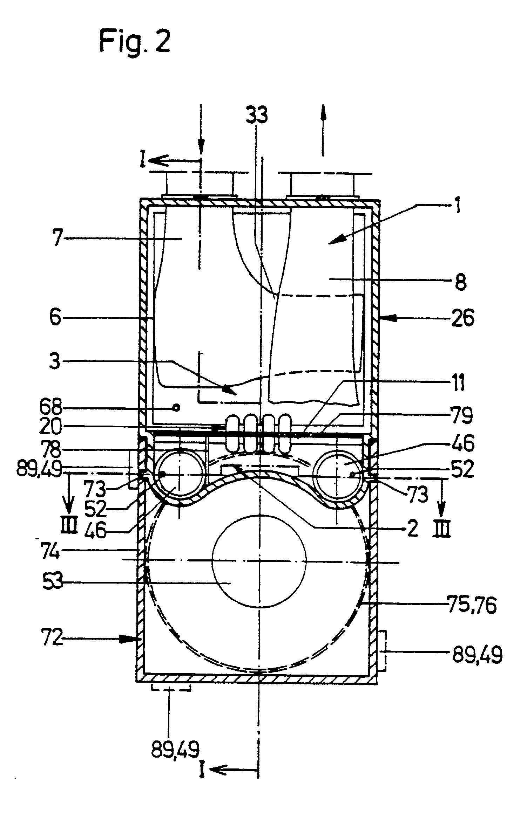

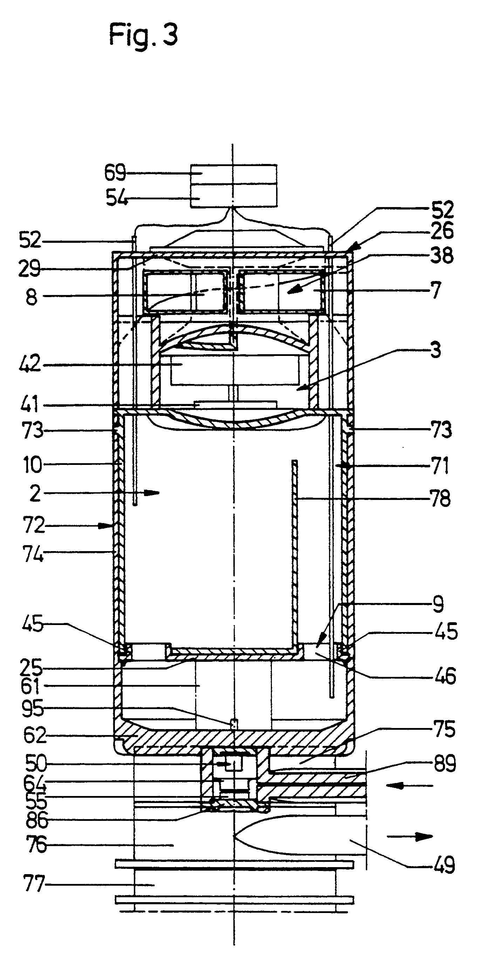

Nachstehend wird nun das Verfahren an Hand der beiliegenden Zeichnungen näher beschrieben. Darin zeigen: Fig. 1 einen Vertikalschnitt durch einen Abscheider nach der Linie I-I der Fig. 2 und Fig.2 und 3 Schnitte nach den Linien II-II und III-III der Fig. 1.

Ein Abscheider entsprechend den Figuren 1 - 3 weist ein Gehäuse 10 auf, das durch eine Trennwand 11, die mit Abstand zur Gehäuseabdeckung 4 endet, in einen Absetzbehälter 1 und einen Nebenbehälter 2, unterteilt ist. Oberhalb beider verbleibt ein gemeinsamer Raum, der Teil eines Luftabscheideraumes 3 ist, der in einem Aufsatz 26 ausgebildet ist. Oberhalb des Absetzbehälters 1 ist ein Einlaß 7 für das von einem zahnärztlichen Saughandstück kommende Feststoff-Flüssigkeits-Saugluftgemisch vorgesehen, wobei diesem eine erste Umlenkfläche 33 zugeordnet ist, sodaß der Endteil des Einlasses etwa U-förmig ausgebildet ist. Die Umlenkfläche 33 erweitert sich vom Einlaß 7 aus in der Breite zur Außenwand 19 des Gehäuses 10 hin. Der Absetzbehälter 1 bildet einen abnehmbaren Sammeltopf 6, der von unten aufgeschoben und dichtend gehalten ist.

Das durch den Einlaß 7 und die Umlenkfläche 33 strömende Gemisch trennt durch die Umlenkung, die Verwirbelung und den Aufprall an die Außenwand 19 Feststoffe und Flüssigkeit von der Saugluft ab, die sich im Absetzbehälter 1 sammeln. Dieser bildet gleichzeitig eine Beruhigungszone für die Ablagerung der Feststoffe am Boden des Sammeltopfes 6. Mit Erreichen einer bestimmten Füllhöhe der Flüssigkeit im Absetzbehälter 1 verdrängt weiter zufließendes Feststoff-Flüssigkeitsgemisch geklärte Flüssigkeit über eine oberhalb des maximalen Feststoffablagerungsniveaus angeordnete Übertrittseinrichtung in den Nebenbehälter 2, die beliebiger Art sein kann. Vorzugsweise ist ein diskontinuierlicher Flüssigkeitsübertritt durch den gezeigten Saugheber 20 vorgesehen, dessen längerer Schenkel 23 bodennah im Nebenbehälter 2 mündet. Die Eintrittsöffnung des kürzeren Schenkels 22 liegt dabei oberhalb der maximalen Ablagerungshöhe und unterhalb des Einsteckrandes des Sammeltopfes 6 und das Überlaufniveau des Saughebers 20 liegt tiefer als der obere Rand der Trennwand, von dem ein Gitter 79 zur Abdeckung 4 hochgezogen ist.

Die von den Feststoffen und der Flüssigkeit befreite Luft wird entlang eines in Verlängerung der Trennwand 11 in den Aufsatz 26 sich erstreckenden Wandabschnittes 27 nach oben, in einer Schraubenlinie eines Zyklons 38 um ein zentrales Absaugrohr 42 nach unten, sodann an dessen Ende durch das Absaugrohr 42 wieder nach oben und schließlich durch den Reinluftauslaß 8 zur Saugpumpe gesaugt. Das Absaugrohr 42 ist durch einen Verschlußkörper 41 verschließbar, der an einem zentral durch das Absaugrohr 42 nach oben ragenden Stab 28 angeordnet ist, der die obere Abdeckung 29 des Aufsatzes 26 durchsetzt und dort einen Kopf 93 aufweist, wobei zwischen der Abdeckung 29 und dem Kopf 93 eine Druckfeder 92 angeordnet ist, sodaß der Verschlußkörper 41 in Schließrichtung beaufschlagt ist.

Die obere Abdeckung 29 begrenzt eine Kammer 30, in der eine Membran 31 angeordnet ist, und über eine Leitung 32, die an den Reinluftauslaß 8 angeschlossen ist, unter Unterdruck steht. Dadurch beaufschlagt die Membran 31 den Kopf 93 und hält den Verschlußkörper 41 in Offenstellung. In die Leitung 32 ist ein Ventil 69 eingesetzt, das über eine Steuerung 54 betätigt wird, der ein Flüssigkeitsniveaufühler 68 zugeordnet ist. Steigt die Flüssigkeit im Gehäuse 10 in den Luftabscheideraum 3 an, so wird über den Niveaufühler 68 das Ventil 69 betätigt, das die Kammer 30 mit der Außenluft in Verbindung setzt, sodaß unter Wirkung der Feder 92 der Verschlußkörper 41 das Absaugrohr 42 verschließt. Vorteilhaft wird dabei gleichzeitig auch die Saugpumpe selbst abgeschaltet. Eine Auffangrinne 94 rund um den Zyklon 38 sammelt Restflüssigkeit und leitet diese ins Gehäuse 10 vorzugsweise in den darunter liegenden Nebenbehälter 2.

Die Entleerung des Nebenbehälters erfolgt über den Flüssigkeitsauslaß 9, der mit geringem Abstand oberhalb des Bodens 25 des Nebenbehälters 2 an einem hochstehenden Rohrstück 45 ausgebildet ist. In dieses ist der Ansaugkanal 46 einer Hilfspumpe 47 eingesetzt. Die Hilfspumpe 47 ist als Flügelradpumpe ausgebildet, die in einem Gehäuse 72 angeordnet ist. Dieses besteht aus einem den Motor 53 aufnehmenden Oberteil 74, dessen Oberseite 62 mit der Abdeckung 4 fluchtet und den Zyklon 38 des Luftabscheideraumes 3 nach unten begrenzt, einem Mittelteil 75 und einem Unterteil 76. Die vertikal verlaufende Antriebswelle 55 ist in einem im Oberteil 74 angeordneten Lagerkörper 61 gelagert, und trägt das Flügelrad 59 und Im Anschluß daran, über Stützstege 91, einen Zentrifugenbehälter 83. Der Lagerkörper 61 ragt dabei durch einen erweiterten Abschnitt des Ansaugkanales 46, und ist an einer horizontalen Bodenplatte 62 mit mittlerer Öffnung 60 mittels Stützstege 95 abgestützt. Vom erweiterten Teil des Ansaugkanals 46 führt eine Luftleitung 71 zurück in den Luftabscheideraum 3, wobei diese durch eine Trennwand 78 vom Nebenbehälter 2 abgeteilt ist. Unterhalb der Öffnung 60 ist das gekrümmte Leitflächen aufweisende Flügelrad 59 angeordnet, dem eine Austrittsöffnung 63 zugeordnet ist, die durch ein Rückschlagventil 50 verschließbar ist, und den Innenraum des Abscheiders gegen Falschlufteintritt sperrt. Die Austrittsöffnung 63 ist dabei in einem den Oberteil 74 vom Mittelteil 75 trennenden Zwischenboden 64 angeordnet, unterhalb dessen Normaldruck gegeben ist. Die Hilfspumpe 47 wird in Abhängigkeit vom Flüssigkeitsstand im Ansaugkanal 46 und im Nebenbehälter 2, der von Fühlern 52 abgetastet wird, über die Steuerung 54 geschaltet.

Der Mittelteil 75 des Pumpengehäuses 72 nimmt einen Zentrifugeneintrittsraum 82 auf, und ist zylindrisch ausgebildet, sodaß er in beliebige Stellung verdreht werden kann. In den Zentrifugeneintrittsraum 82, der nach unten durch eine Leitfläche 86 begrenzt ist, die im peripheren Teil horizontal verläuft und in eine mit der Antriebswelle 55 koaxiale in den Zentrifugeninnenraum 90 ragende Hülse übergeht, mündet im wesentlichen tangential eine Ablaufleitung 89 (Fig. 3) einer Speischale, sodaß auch von dort kommende Feststoffe durch die Zentrifuge 80 abgeschieden werden können, die im nachfolgenden Unterteil 76 des Pumpengehäuses ausgebildet ist. Der Zentrifugenbehälter 83 verjüngt sich nach unten zu einer Bodenöffnung 84, durch die abzentrifugierte Feststoffe in den auf den Unterteil 76 aufgesetzten Auffangtopf 77 gelangen. Die Flüssigkeit steigt hingegen im Zentrifugenbehälter 83 nach oben und tritt über einen nach innen abstehenden Ringflansch 85 in einen äußeren Ringkanal 88 des Unterteiles 76, wobei der Ringkanal zum Auffangtopf 77 hin durch einen äußeren Ringflansch 87 des Zentrifugenbehälters 83 abgedeckt ist. Die gereinigte Flüssigkeit fließt über den Ablaufkanal 49 (Fig. 3) ab, der ebenso wie die Ablaufleitung 89 der Speischale in beliebige Stellung verdrehbar ist. Da der Auffangtopf 77 meist ein begrenztes Fassungsvermögen aufweist, das geringer als das des Sammeltopfes 6 des Absetzbehälters 1 ist, ist weiters der Auffangtopf 77 über eine Leitung 81 mit den Gemischeinlaß 7 verbunden, wobei die Eintrittsöffnung durch ein Sieb 65 überdeckt ist. Der in der Zentrifuge 80 hauptsächlich abgeschiedene Feinschlamm wird somit in den Gemischeinlaß 7 zurückgesaugt, und verbleibt zu einem wesentlichen Teil im Absetzbehälter 1.

Das Abscheidegehäuse 10 ist vom Pumpengehäuse 74 in einfacher Weise trennbar, sobald der Aufsatz 26 abgenommen ist. Die beiden Rohrstücke 45 bilden Aufsteckteile für den Nebenbehälter 2, der an der Oberseite seitliche Stifte 73 trägt, die von oben in Schlitze der Seitenwände des Pumpengehäuses 72 einsetzbar sind.

## Patentansprüche

1. Verfahren zur Trennung eines dentalen FeststoffFlüssigkeitsgemisches, das dem Einlaß (82) einer Zentrifuge (80) zugeführt wird, wobei die Feststoffe aus dem Gemisch abzentrifugiert, nach jeder Zentrifugierphase gemeinsam mit Restflüssigkeit unter Einwirkung von Schwerkraft durch den Auslaß (84) der Zentrifuge (80) entleert und von oben in einen Absetzbehälter (1) eingebracht werden, in dem sie sedimentiert werden, worauf die sich über den absetzenden Feststoffen sammelnde Restflüssigkeit nach oben abgesaugt und wieder der Zentrifuge (80) zugeführt wird, in der noch enthaltene Feststoffe neuerlich zentrifugiert werden, und wobei gereinigte Flüssigkeit in einen Ablaufkanal (49) ausgetragen wird, dadurch gekennzeichnet, daß ein die Zentrifuge (80) und den Absetzbehälter (1) enthaltender Kreislauf ausgebildet wird, in dem die Restflüssigkeit, gemeinsam mit den aus der Zentrifuge (80) ausfließenden Feststoffen, über eine im Absetzbehälter (1) oberhalb eines maximalen Flüssigkeitsniveaus mündende Leitung (81) in den Absetzbehälter (1) gesaugt und, gemeinsam mit den noch enthaltenen Feststoffen, aus dem Absetzbehälter (1) zu dem Zentrifugeneinlaß (82) übergeleitet wird.

2. Verfahren nach Anspruch 1, dadurch gekennzeichnet, daß der Kreislauf durch ein von der zahnärztlichen Absauganlage erzeugtes Unterdrucksystem geführt wird, wobei die Zentrifuge (80) außerhalb und der Absetzbehälter (1) innerhalb des Unterdrucksystems vorgesehen werden, daß in der Zentrifuge (80) ein unter Normaldruck zufließendes sowie ein im Unterdrucksystem zugeführtes und daraus mittels einer Hilfspumpe (47) ausgetragenes Gemisch gemeinsam getrennt werden, wobei die aus der Zentrifuge (80) ausfließende Restflüssigkeit gemeinsam mit den Feststoffen in das im Unterdrucksystem zugeführte Gemisch eingesaugt wird.

## Claims

1. A method of separating a dental solid-liquid mixture which is fed to the inlet (82) of a centrifuge (80), wherein the solids are centrifuged out of the mixture, emptied through the outlet (84) of the centrifuge (80) after each centrifuging phase jointly with residual liquid under the effect of the force of gravity and introduced from above into a settlement container (1) in which they are sedimented, whereupon the residual liquid which accumulates above the settling solids is sucked off upwardly and fed again to the centrifuge (80) in which solids still contained therein are again centrifuged, and wherein purified liquid is discharged into a drain duct (49), characterised in that there is formed a circuit which includes the centrifuge (80) and the settlement container (1) and in which the residual liquid, jointly with the solids flowing out of the centrifuge (80), is sucked into the settlement container (1) by way of a conduit (81) opening in the settlement container (1) above a maximum level of liquid and is transferred jointly with the solids still contained therein from the settlement container (1) to the centrifuge inlet (82).

2. A method according to claim 1 characterised in that the circuit is passed through a reduced pressure system which is produced by a dental suction installation, wherein the centrifuge (80) is provided outside the reduced pressure system and the settlement container (1) is provided within the reduced pressure system, that a mixture flowing to the centrifuge under normal pressure and a mixture which is supplied in the reduced pressure system and which is discharged therefrom by means of an auxiliary pump (47) are jointly separated in the centrifuge (80), wherein the residual liquid flowing out of the centrifuge (80) is sucked jointly with the solids into the mixture which is supplied in the reduced pressure system.

## Revendications

1. Procédé de séparation d'un mélange dentaire liquide-solide, qui est amené à l'entrée (82) d'une centrifuge (80), où les matières solides sont séparées du mélange par centrifugation, évacuées après chaque phase de centrifugation, conjointement avec le liquide résiduel sous l'effet de la force de gravité par la sortie (84) de la centrifugeuse (80) et introduites par le haut dans un réservoir de décantation (1), dans lequel elles s'édimentent, sur quoi le liquide s'accumulant sur les matières solides se déposant est aspiré vers le haut et amené à nouveau à la centrifugeuse (80), dans laquelle des matières solides encore présentes sont une nouvelle fois centrifugées, et où du liquide purifié est déchargé dans un canal de sortie (49), caractérisé par le fait qu'il est formé un circuit contenant la centrifugeuse (80) et le réservoir de décantation (1), circuit dans lequel le liquide résiduel, conjointement avec les matières solides s'écoulant hors de la centrifugeuse (80), est aspiré dans le réservoir de décantation (1) par l'intermédiaire d'une conduite (81) débouchant dans le réservoir de décantation (1) au-dessus d'un niveau de liquide maximal et, conjointement avec les matières solides encore présentes, est transféré du réservoir de décantation (1) à l'entrée (82) de la centrifugeuse.

2. Procédé selon la revendication 1, caractérisé par le fait que le circuit est guidé à travers un système de vide produit par l'installation d'aspiration dentaire, où la centrifugeuse (80) est prévue à l'extérieur, et le récipient de décantation (1), à l'intérieur du système de vide, que dans la centrifugeuse (80), un mélange arrivant sous pression normale ainsi qu'un mélange amené dans le système de vide et déchargé de celui-ci à l'aide d'une pompe auxiliaire (47) sont séparés de façon conjointe, le liquide résiduel sortant de la centrifugeuse (80) étant aspiré conjointement avec les matières solides dans le mélange amené dans le système de vide.

# Fig. 1

## Fig. 2

# Fig. 3